# EUROPÄISCHE PATENTSCHRIFT

(11) **EP 4 584 143 B1**
(45) Veröffentlichungstag und Bekanntmachung des Hinweises auf die Patenterteilung: **06.05.2026**
(21) Anmeldenummer: 23758240.8
(22) Anmeldetag: 09.08.2023
(51) Int. Cl.: B60W 50/14

(54) **SYSTEM ZUM ERHÖHEN DER FAHRSICHERHEIT BEIM FAHREN EINES KRAFTRADS SOWIE VERFAHREN ZUM ERHÖHEN DER FAHRSICHERHEIT EINES KRAFTRADS**
SYSTEM FOR INCREASING DRIVING SAFETY WHEN DRIVING A MOTORCYCLE AND METHOD FOR INCREASING THE DRIVING SAFETY OF A MOTORCYCLE
SYSTÈME POUR AUGMENTER LA SÉCURITÉ DE CONDUITE LORS DE LA CONDUITE D'UNE MOTOCYCLETTE ET PROCÉDÉ POUR AUGMENTER LA SÉCURITÉ DE CONDUITE D'UNE MOTOCYCLETTE

(30) Priorität: 06.09.2022 DE 102022122485
(43) Veröffentlichungstag der Anmeldung: 16.07.2025
(73) Patentinhaber: Bayerische Motoren Werke Aktiengesellschaft, 80809 München (DE)
(72) Erfinder: BERGER, Jens, 81545 München (DE)
(86) Internationale Anmeldenummer: PCT/EP2023/072005
(87) Internationale Veröffentlichungsnummer: WO 2024/052036

(56) Entgegenhaltungen:
- EP-A1- 3 892 510
- DE-A1- 102011 002 920
- DE-A1- 102015 121 443
- DE-A1- 102021 212 387
- CHELI F. ET AL: "Vision-based measuring system for rider's pose estimation during motorcycle riding", MECHANICAL SYSTEMS AND SIGNAL PROCESSING, vol. 38, no. 2, 1 July 2013 (2013-07-01), AMSTERDAM, NL, pages 399 - 410, XP093055895, ISSN: 0888-3270, Retrieved from the Internet <URL:https://pdf.sciencedirectassets.com/272413/1-s2.0-S0888327013X00068/1-s2.0-S0888327013000289/main.pdf?X-Amz-Security-Token=IQoJb3JpZ2luX2VjEEwaCXVzLWVhc3QtMSJHMEUCIQCMlpdL4lG23X1OaXNzfUyOEh6YJ/nqVvZfmmPvWevHFQIgBkwrf64dozE0gqFqR6oCRvqzXEaeX+bT17xC7Q08ls0quwUIpf//////////ARAFGgwwNTkwMDM1NDY4NjUiDJBsI> DOI: 10.1016/j.ymssp.2013.01.009

## Beschreibung

Die vorliegende Erfindung betrifft ein System zum Erhöhen der Fahrsicherheit beim Fahren eines Kraftrads sowie ein Verfahren zum Erhöhen der Fahrsicherheit beim Fahren eines Kraftrads.

Bei Krafträdern, wie beispielsweise Motorrädern, nehmen die Fahrerhaltung oder Sitzposition eine herausragende Stellung ein. Oftmals neigen Motoradfahrer dazu, besonders in Kurven, mit der falschen Körperhaltung zu fahren. Dies kann zu einer ungünstigen Schwerpunktverteilung und eingeschränkter Manövrierfähigkeit des Motorrads führen. Letztlich resultiert aus einer falschen Fahrerhaltung/Sitzposition ein hohes Sicherheitsrisiko. Die DE 10 2017 200 065 A1 offenbart ein Lenkunterstützungsverfahren in einem Zweirad bei Kurvenfahrt, dessen Lenksystem mit einer Servoeinheit zur Erzeugung eines lenkunterstützenden Servomoments ausgestattet ist, wobei über eine Sensorik im Zweirad die aktuelle Geschwindigkeit und die aktuelle Schräglage ermittelt und über ein Positionsbestimmungssystem die Zweiradposition bestimmt werden, wobei bei einer Abweichung der aktuellen Schräglage von einer dem Kurvenradius und der aktuellen Geschwindigkeit entsprechenden Soll-Schräglage über die Servoeinheit ein Servomoment im Lenksystem erzeugt wird, das der Abweichung der aktuellen Schräglage von der Soll-Schräglage entgegengerichtet ist. Ein derartiger Lenkeingriff kann aber gerade für ungeübte Motorradfahrer eher unangenehm sein. Die DE 10 2019 202 330 A1 betrifft ein Verfahren zur Bestimmung der Position eines Aufsassens auf einem Fahrzeug, bei dem mithilfe mindestens eines vom Aufsassen getragenen Personensensors personenbezogene Sensorsignale ermittelt und mithilfe mindestens eines am Fahrzeug angeordneten Fahrzeugsensors fahrzeugbezogene Sensorsignale ermittelt werden, wobei die Position des Aufsassen auf dem Fahrzeug als Funktion der personenbezogenen und der fahrzeugbezogenen Sensorsignale ermittelt wird. Damit ist es beispielsweise mögliche, Kennlinien in einem die Fahrdynamik des Fahrzeugs beeinflussenden Aggregats als Funktion der Position des Aufsassen einzustellen. Weiter ist es möglich, bei einer von der Sollposition abweichenden Sitzposition des Aufsassen diesen zu warnen. Nachteilig daran ist, dass die kritische Situation ebenfalls bereits eingetreten ist.

Die EP 3 892 510 A1 betrifft eine Vorrichtung und ein Verfahren zum Warnen eines Fahrers unter Beobachtung der Umgebungsbedingungen.

Die DE 10 2015 121 443 A1 betrifft das Gebiet von Fahrerinformationssystemen und Fahrerassistenzsystemen, insbesondere für Zweiräder, wie Motorräder.

Die DE 10 2011 002 920 A1 betrifft ein Verfahren zur Verbesserung der Sicherheit des Motorradfahrens. Mittels einer Sensorik wird überwacht, ob ein Motorradfahrer eine vorgegebene Körperhaltung einnimmt, wenn mittels eines Algorithmus auf einem Steuergerät erkannt wurde, dass der Motorradfahrer länger als eine vorgegebene Zeitdauer von der vorgegebenen Körperhaltung abweicht, wird ein Signalgeber aktiviert.

Die DE 10 2021 212 387 A1 betrifft eine Steuervorrichtung und ein Steuerverfahren, mit denen die Sicherheit eines Fahrzeugs verbessert werden kann. Hinter dem Fahrer ist eine Kamera positioniert und auf den Fahrer gerichtet. Dadurch kann ein Fahrerassistenzbetrieb entsprechend dem Zustand auf dem Fahrzeug in geeigneter Weise ausgeführt werden.

Es ist daher eine Aufgabe der vorliegenden Erfindung, ein System zum Erhöhen der Fahrsicherheit beim Fahren eines Kraftrads sowie ein Verfahren zum Erhöhen der Fahrsicherheit beim Fahren eines Kraftrads anzugeben, wobei die bekannten Systeme und Verfahren weiterentwickelt und angepasst werden sollen.

Diese Aufgabe wird durch ein System gemäß Anspruch 1 sowie durch ein Verfahren gemäß Anspruch 8 gelöst. Weitere Vorteile und Merkmale ergeben sich aus den Unteransprüchen sowie der Beschreibung und den beigefügten Figuren.

Erfindungsgemäß umfasst ein System zum Erhöhen der Fahrsicherheit beim Fahren eines Kraftrads eine Erfassungseinrichtung, welche ausgelegt ist, eine Ist-Fahrerhaltung sowie Fahrzeug- und Umgebungsinformationen zu erfassen, wobei die Erfassungseinrichtung ausgelegt ist, aus den Fahrzeug- und Umgebungsinformationen, sowie gemäß einer Ausführungsform der Ist-Fahrerhaltung, eine Soll-Fahrerhaltung abzuleiten und dem Fahrer anzuzeigen. Vorteilhafterweise wird vorliegend also ein System bereitgestellt, welches ermöglicht, die Sitzposition oder Fahrerhaltung zu optimieren. Das System hilft also dabei, das Fahrkönnen des Fahrers zu verbessern. Gefahrensituationen können so mit Vorteil vermieden werden bzw. entstehen im Idealfall erst gar nicht. Die Erfassungseinrichtung ermöglicht mit Vorteil eine Ist-Situation aufzunehmen bzw. zu erfassen. Die Ist-Situation umfasst dabei gemäß einer Ausführungsform die Ist-Fahrerhaltung sowie Fahrzeug- und Umgebungsinformationen. Mit anderen Worten wird erfasst, was das Fahrzeug gerade macht, was der Fahrer gerade macht bzw. wie das Umfeld oder die Umgebung aussieht.

Gemäß einer Ausführungsform ist die Erfassungseinrichtung auch ausgelegt, einen Fahrerzustand zu erfassen und/oder zu analysieren, insbesondere beispielsweise zu erkennen, ob der Fahrer fahrtauglich ist oder zu müde, unaufmerksam oder sogar bewusstlos etc. Darüber hinaus ist es zweckmäßigerweise möglich, zu erfassen, ob der Fahrer auf dem Motorrad sitzt, ob das Motorrad am Boden liegt, insbesondere also, ob ein Unfall stattgefunden hat oder zumindest droht. In diesen Fällen ist das System zweckmäßigerweise ausgelegt, insbesondere automatisch oder selbsttätig und beispielsweise über eine vernetztes (IT-)System (in Kombination mit einem mobilen Endgerät, wie Smartphone, einer entsprechenden App etc.), einen Notruf abzusenden oder das Fahrzeug in einen sicheren Fahrzustand zu bringen.

Gemäß einer Ausführungsform umfasst die Ist-Fahrerhaltung zumindest eine der folgenden Informationen: Kopfhaltung, Oberkörperhaltung, Armhaltung, Schulterhaltung, Beinhaltung, Sitzposition auf dem Fahrersitz (beispielsweise vorne, hinten mittig) etc.

Gemäß einer Ausführungsform umfassen die Fahrzeuginformationen zumindest eine der folgenden Informationen: den Neigungswinkel des Kraftrads, eine Lenkradstellung, die Geschwindigkeit, den Schwerpunkt (mit und ohne Fahrer oder ggf. auch Beifahrer), die Gaspedalstellung und/oder Bremshebel- oder Bremspedalstellung.

Gemäß einer Ausführungsform umfassen die Umgebungsinformationen zumindest eine der folgenden Informationen: Streckenverlauf, Streckenprofil, Fahrlinie/Ideallinie, Wetter, Fahrbahnzustand, und/oder Gefahrenmeldungen.

Mit dem System ist es beispielsweise möglich, eine für eine Ideallinie optimale Fahrerhaltung zu bestimmen. Gemäß einer Ausführungsform ist das System ausgelegt, dem Fahrer eine Soll-Fahrerhaltung anzuzeigen, welche zum Erreichen oder Nachfahren der Ideallinie optimal ist.

Speziell beim Kurvenfahren gibt es beispielsweise die Möglichkeit, sich in die Kurve zu legen. Damit ist gemeint, dass der Fahrer und das Kraftrad in Bezug auf die Fahrebene im Wesentlichen den gleichen Neigungswinkel aufweisen. Daneben ist es möglich, dass sich der Fahrer in die Kurve hängt, wobei der Fahrer einen deutlich kleineren Neigungswinkel gegenüber der Fahrbahnebene aufweist als das Motorrad. Alternativ ist das sogenannte "Drücken" möglich, wobei das Motorrad einen kleineren Neigungswinkel in Bezug auf die Fahrbahnebene aufweist als der Fahrer. Situationsabhängig kann das System zweckmäßigerweise vorliegend die ideale Soll-Fahrerhaltung angeben.

Weiter alternativ ist es möglich, dass bestimmte Randbedingungen vorgegeben werden, um die Soll-Fahrerhaltung in gewissen Bereichen zu beeinflussen. So ist es bei sogenannten "Supersportlern" in der Regel nicht üblich, diese zu "drücken". Stattdessen wird sich ein Fahrer bei dieser Art von Maschine eher in die Kurve legen bzw. hängen. Zweckmäßigerweise kann das System die unterschiedlichen Nuancen berücksichtigen.

Bevorzugt umfasst das System eine Anzeige, welche ausgelegt ist, einem Fahrer eine oder mehrere Anweisungen zum Erreichen der Soll-Fahrerhaltung anzuzeigen. So ist es beispielsweise möglich, über die Anzeige dem Fahrer anzuzeigen, dass sich dieser noch weiter in die Kurve legen müsste. In gleicher Weise ist es beispielsweise möglich, dem Fahrer anzuzeigen, dass er das Kraftrad weiter in die Kurve drücken müsste. Daneben kann dem Fahrer beispielsweise signalisiert werden, dass er zu weit vorne sitzt etc.

In der Folge ermöglicht das System mit Vorteil, das Fahrerkönnen zu erhöhen. Die Abweichung zwischen der Ist-Fahrerhaltung und der Soll-Fahrerhaltung wird idealerweise mit der Zeit immer kleiner.

Gemäß einer Ausführungsform umfasst die Erfassungseinrichtung ein oder mehrere Erfassungsmittel. Derartige Erfassungsmittel können Sensoren, wie Bildsensoren, Drucksensoren, Neigungssensoren etc. umfassen, welche ausgelegt sind, insbesondere die Ist-Fahrerhaltung, die Fahrzeug- sowie die Umgebungsinformationen zu erfassen. Insbesondere zum Erfassen der Fahrzeuginformationen können auch ohnehin bereits in der Fahrzeugelektronik vorhandene Sensoren und Daten verwendet werden.

Gemäß einer Ausführungsform umfasst das System eine Datenbasis, wobei die Datenbasis Zusatzinformationen zum Beeinflussen der Soll-Fahrerhaltung umfasst. Eine derartige Zusatzinformation kann beispielsweise der vorgenannte Motorradtyp sein, also eine Information dahingehend, ob es sich beispielsweise um ein Tourenmotorrad, um ein Sportmotorrad, um einen Motorroller etc. handelt. Zusatzinformationen können weiter historische Daten sein, welche den Fahrstil des Fahrers umfassen. Daneben können auch Fahrerdaten, wie Geschlecht, Größe, Gewicht etc. umfasst sein.

Die Erfindung richtet sich weiter auf ein Verfahren zum Erhöhen der Fahrsicherheit beim Fahren eines Kraftrads, umfassend die Schritte:
- Erfassen einer Ist-Fahrerhaltung;
- Analyse von Fahrzeug- und Umgebungsinformationen;
- Ableiten einer Soll-Fahrerhaltung aus den Fahrzeug- und Umgebungsinformationen sowie gemäß einer Ausführungsform der Ist-Fahrerhaltung;
- Anzeigen der Soll-Fahrerhaltung dem Fahrer.

Das Verfahren ermöglicht vorteilhafterweise, dass der Fahrer eine optimale Fahrposition auf dem Kraftrad einnimmt. Der Fahrer wird beim Fahren unterstützt. Beispielsweise unterstützt das System oder das Verfahren den Fahrer beim Fahren der Kurvenideallinie und sorgt für sichere Bedienung des Fahrzeugs bei Beschleunigungs- und Verzögerungsvorgängen. Die Analyse/Assistenz zur optimalen Fahrerposition/-Haltung mit Kopfhaltung kann gekoppelt werden mit einer Analyse und Empfehlung bezüglich des Fahrens auf Geraden und in der Kurve basierend auf der Kurvenideallinie. Die Kurvenideallinie kann mit einem einfachen Modell basierend auf Kurvenlänge/-winkel erstellt werden oder optional mit einer Fahrbahnkamera und einem detaillierten Umfeldmodell angereichert werden.

Bevorzugt umfasst das Verfahren den Schritt:
- Vorgeben von Randbedingungen zum Beeinflussen der Soll-Fahrerhaltung. Bei dem Verfahren kann mit Vorteil berücksichtigt werden, wie trainiert der Fahrer ist, ob er eher schnell oder langsam fahren will etc. Es kann beispielsweise ein Rennstreckenmodus eingestellt werden, welcher für abgesicherte Strecken vorgesehen ist. Hierbei sind ein möglichst schnelles Fahren nebst entsprechender Fahrerhaltung mögliche Zielgrößen. Gemäß einer Ausführungsform wäre es auch möglich, dem Fahrer eine Geschwindigkeitsanpassung, sei es nach oben oder nach unten, zusammen mit der Soll-Fahrerhaltung anzuzeigen.

Gemäß einer Ausführungsform umfasst das Verfahren den Schritt:
- Aufzeichnen der Ist-Fahrerhaltung.

Zweckmäßigerweise ermöglicht das Aufzeichnen der Ist-Fahrerhaltung eine spätere Analyse und Auswertung. Damit ist es beispielsweise möglich, dass die Ist-Fahrerhaltung nachträglich mit der Soll-Fahrerhaltung verglichen wird. Daraus kann der Fahrer etwaige Schlüsse ziehen und bekommt die Möglichkeit seinen Fahrstil weiter zu verbessern.

Die im Zusammenhang mit dem Verfahren erwähnten Vorteile und Merkmale gelten entsprechend auch für das System, wie auch umgekehrt.

Weitere Vorteile und Merkmale ergeben sich aus der nachfolgenden Beschreibung einer Ausführungsform eines Systems bzw. eines Verfahrens mit Bezug auf die beigefügten Figuren.

Es zeigen:
- Fig. 1:: eine schematische Ansicht eines Kraftrads mit Fahrer zum Veranschaulichen einer Arbeitsweise einer Ausführungsform des Systems bzw. des Verfahrens;
- Fig. 2:: ein Ablaufdiagramm zum Veranschaulichen einer Arbeitsweise einer Ausführungsform des Systems bzw. des Verfahrens.

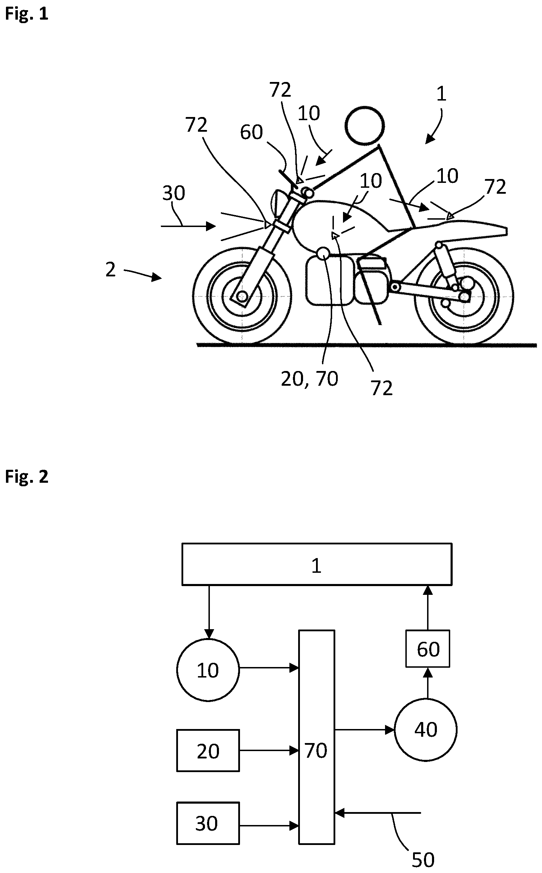

**Fig. 1** zeigt einen Fahrer 1, welcher auf einem Kraftrad 2 fährt. Das Kraftrad 2 umfasst ein System zum Erhöhen der Fahrsicherheit. Das System umfasst eine Erfassungseinrichtung, welche vorliegend mit dem Bezugszeichen 70 skizziert ist. Die Erfassungseinrichtung 70 umfasst eine Vielzahl von Erfassungsmitteln 72, wie Sensoren. Einige der Erfassungsmittel 72 sind auf den Fahrer 1 gerichtet, um eine Ist-Fahrerhaltung 10 zu erfassen. Dargestellt ist auch, dass zumindest ein Erfassungsmittel 72 entlang einer Fahrtrichtung des Kraftrads 2 nach vorne gerichtet ist, um beispielsweise Umgebungsinformationen 30, wie den Streckenverlauf etc., zu erfassen. Mit dem Bezugszeichen 20 sind Fahrzeuginformationen gemeint und bezeichnet, welche beispielsweise über die Fahrzeugelektronik erfasst werden, wie Neigungswinkel, Geschwindigkeit, aktuelle Schwerpunktlage, mit oder ohne Fahrer 1 etc. Das System arbeitet beispielsweise so, dass aus den Fahrzeug- und Umgebungsinformationen 20, 30 sowie optional der Ist-Fahrerhaltung 10 eine Soll-Fahrerhaltung 40 errechnet bzw. abgeleitet werden kann. Diese wird dem Fahrer 1 zweckmäßigerweise angezeigt, wobei hierzu vorliegend eine Anzeige 60 vorgesehen ist. Dem Fahrer 1 wird also über die Anzeige 60 mitgeteilt, wie er seine Körperhaltung anpassen muss, um beispielsweise die Kurvenideallinie zu treffen. Gemäß einer Ausführungsform analysiert zumindest eine Kamera den Fahrer 1 sowie seine Körper- oder Kopfhaltung. Ein weiterer Sensor analysiert beispielsweise die Sitzposition des Fahrers 1 auf der Sitzbank, den Schwerpunkt (des Motorrads mit Fahrer). Eine optionale Fahrbahnkamera identifiziert beispielsweise die Straße. Das System umfasst gemäß einer Ausführungsform ein Straßen- und Kurvenmodell, welches ausgelegt ist, eine Kurvenideallinie zu berechnen. Die Fahrerhaltung/-position wird mit dem Straßenkurvenmodell abgeglichen und analysiert. Über die Anzeige 60 erhält der Fahrer 1 Vorschläge zur Verbesserung seiner Fahrerhaltung/-position kontinuierlich oder auch nach der Fahrt. Zweckmäßigerweise ist das System auch ausgelegt, mit einem mobilen Endgerät, wie einem Smartphone, zu kommunizieren und entsprechend Daten zu übertragen. Gemäß einer Ausführungsform kann über das Smartphone mit einem vernetzten (IT-)System kommuniziert werden. Der Fahrerzustand, das Vorliegen eines Unfalls kann damit zweckmäßigerweise detektiert und ein Notruf abgesetzt werden.

**Fig. 2** zeigt schematisch einen Ablauf des Verfahrens, wobei insbesondere deutlich wird, dass es sich bei dem Verfahren um einen iterativen Prozess handelt. Aus einer Ist-Fahrerhaltung 10, Fahrzeuginformationen 20, sowie Umgebungsinformationen 30 wird in einer Erfassungseinrichtung 70 eine Soll-Fahrerhaltung 40 errechnet. Diese kann über eine Anzeige 60 einem Fahrer 1 mitgeteilt werden, welcher hierauf seine Ist-Fahrerhaltung 10 ggf. korrigiert. Diese wird erneut erfasst etc. Aus den sich mittlerweile geänderten Fahrzeuginformationen 20 sowie Umgebungsinformationen 30 wird eine neue Soll-Fahrerhaltung 40 errechnet etc. Bezugszeichen 50 signalisiert, dass die Erfassungseinrichtung 70 mit entsprechenden Randbedingungen bedatet werden kann bzw. diese berücksichtigt. Hierbei kann beispielsweise vorgegeben werden, um welchen Motorradtyp es sich handelt, ob es sich um einen Fahranfänger oder um einen fortgeschrittenen Fahrer handelt etc.

### Bezugszeichenliste

- 1: Fahrer
- 2: Kraftrad
- 10: Ist-Fahrerhaltung
- 20: Fahrzeuginformationen
- 30: Umgebungsinformationen
- 40: Soll-Fahrerhaltung
- 50: Randbedingungen
- 60: Anzeige
- 70: Erfassungseinrichtung
- 72: Erfassungsmittel, Sensor

## Patentansprüche

1. System zum Erhöhen der Fahrsicherheit beim Fahren eines Kraftrads, umfassend eine Erfassungseinrichtung (70), welche ausgelegt ist, eine Ist-Fahrerhaltung (10) sowie Fahrzeug- (20) und Umgebungsinformationen (30) zu erfassen, und
wobei die Erfassungseinrichtung (70) ausgelegt ist, aus den Fahrzeug- (20) und Umgebungsinformationen (30) eine Soll-Fahrerhaltung (40) abzuleiten und dem Fahrer (1) anzuzeigen.

2. System nach Anspruch 1,
wobei die Ist-Fahrerhaltung (10) zumindest eine der folgenden Informationen umfasst: Kopfhaltung, (Ober-)Körperhaltung, Armhaltung, Schulterhaltung, Beinhaltung, Sitzposition auf einem Fahrersitz.

3. System nach Anspruch 1 oder 2,
wobei die Fahrzeuginformationen (20) zumindest eine der folgenden Informationen umfassen: Neigungswinkel, Lenkradstellung, Geschwindigkeit, Schwerpunkt, Gaspedalstellung und/oder Bremshebel-/Pedalstellung.

4. System nach einem der vorhergehenden Ansprüche,
wobei die Umgebungsinformationen (30) zumindest eine der folgenden Informationen umfassen: Streckenverlauf, Streckenprofil, Fahrlinie/Ideallinie, Wetter, Fahrbahnzustand und/oder Gefahrenmeldungen.

5. System nach einem der vorhergehenden Ansprüche,
umfassend eine Anzeige (60), welche ausgelegt ist, einem Fahrer (1) eine oder mehrere Anweisungen zum Erreichen der Soll-Fahrerhaltung (40) anzuzeigen.

6. System nach einem der vorhergehenden Ansprüche,
wobei die Erfassungseinrichtung (70) ein oder mehrere Erfassungsmittel (72) umfasst.

7. System nach einem der vorhergehenden Ansprüche,
umfassend eine Datenbasis,
wobei die Datenbasis Zusatzinformationen zum Beeinflussen der Soll-Fahrerhaltung (40) umfasst.

8. Verfahren zum Erhöhen der Fahrsicherheit beim Fahren eines Kraftrads, umfassend die Schritte:
- Erfassen einer Ist-Fahrerhaltung (10);
- Analyse von Fahrzeug- (20) und Umgebungsinformationen (30);
- Ableiten einer Soll-Fahrerhaltung (40) aus den Fahrzeug- (20) und Umgebungsinformationen (30);
- Anzeigen der Soll-Fahrerhaltung (40) dem Fahrer.

9. Verfahren nach Anspruch 8,
umfassend den Schritt:
- Vorgeben von Randbedingungen (50) zum Beeinflussen der Soll-Fahrerhaltung (40).

10. Verfahren nach Anspruch 8 oder 9,
umfassend den Schritt:
- Aufzeichnen der Ist-Fahrerhaltung (10).

## Claims

1. System for increasing driving safety when riding a motorcycle,
comprising a detection device (70) which is designed to detect an actual rider posture (10) as well as vehicle (20) and environment information (30), and
wherein the detection device (70) is designed to derive a target rider posture (40) from the vehicle (20) and environment information (30) and to display it to the rider (1).

2. System according to claim 1,
wherein the actual rider posture (10) comprises at least one of the following information: head posture, (upper) body posture, arm posture, shoulder posture, leg posture, seating position on a rider seat.

3. System according to claim 1 or 2,
wherein the vehicle information (20) comprises at least one of the following information: angle of inclination, steering wheel position, speed, centre of gravity, throttle position and/or brake lever/pedal position.

4. System according to any one of the preceding claims,
wherein the environment information (30) comprises at least one of the following information: route course, route profile, driving line/ideal line, weather, road surface condition and/or hazard warnings.

5. System according to any one of the preceding claims,
comprising a display (60) which is designed to display one or more instructions to a rider (1) for achieving the target rider posture (40).

6. System according to any one of the preceding claims,
wherein the detection device (70) comprises one or more detection means (72).

7. System according to any one of the preceding claims,
comprising a database,
wherein the database comprises additional information for influencing the target rider posture (40).

8. Method for increasing driving safety when riding a motorcycle,
comprising the steps:
- detecting an actual rider posture (10);
- analysing vehicle (20) and environment information (30);
- deriving a target rider posture (40) from the vehicle (20) and environment information (30);
- displaying the target rider posture (40) to the rider.

9. Method according to claim 8,
comprising the step:
- specifying boundary conditions (50) for influencing the target rider posture (40).

10. Method according to claim 8 or 9,
comprising the step:
- recording the actual rider posture (10).

## Revendications

1. Système pour augmenter la sécurité de conduite lors de la conduite d'une motocyclette,
comprenant un dispositif de détection (70) qui est conçu pour détecter une posture réelle du conducteur (10) ainsi que des informations de véhicule (20) et d'environnement (30), et
le dispositif de détection (70) étant conçu pour dériver une posture cible du conducteur (40) à partir des informations de véhicule (20) et d'environnement (30) et pour l'afficher au conducteur (1).

2. Système selon la revendication 1,
la posture réelle du conducteur (10) comprenant au moins l'une des informations suivantes: posture de la tête, posture du corps (supérieur), posture des bras, posture des épaules, posture des jambes, position assise sur un siège conducteur.

3. Système selon la revendication 1 ou 2,
les informations de véhicule (20) comprenant au moins l'une des informations suivantes: angle d'inclinaison, position du volant, vitesse, centre de gravité, position de la pédale d'accélérateur et/ou position du levier/de la pédale de frein.

4. Système selon l'une quelconque des revendications précédentes,
les informations d'environnement (30) comprenant au moins l'une des informations suivantes: tracé du parcours, profil du parcours, ligne de conduite/ligne idéale, météo, état de la chaussée et/ou avertissements de danger.

5. Système selon l'une quelconque des revendications précédentes,
comprenant un affichage (60) qui est conçu pour afficher une ou plusieurs instructions à un conducteur (1) pour atteindre la posture cible du conducteur (40).

6. Système selon l'une quelconque des revendications précédentes,
le dispositif de détection (70) comprenant un ou plusieurs moyens de détection (72).

7. Système selon l'une quelconque des revendications précédentes,
comprenant une base de données,
la base de données comprenant des informations supplémentaires pour influencer la posture cible du conducteur (40).

8. Procédé pour augmenter la sécurité de conduite lors de la conduite d'une motocyclette,
comprenant les étapes:
- détection d'une posture réelle du conducteur (10);
- analyse d'informations de véhicule (20) et d'environnement (30);
- dérivation d'une posture cible du conducteur (40) à partir des informations de véhicule (20) et d'environnement (30);
- affichage de la posture cible du conducteur (40) au conducteur.

9. Procédé selon la revendication 8,
comprenant l'étape:
- spécification de conditions limites (50) pour influencer la posture cible du conducteur (40).

10. Procédé selon la revendication 8 ou 9,
comprenant l'étape:
- enregistrement de la posture réelle du conducteur (10).
